# EUROPÄISCHE PATENTSCHRIFT

(11) **EP 2 791 993 B1**
(45) Veröffentlichungstag und Bekanntmachung des Hinweises auf die Patenterteilung: **20.07.2016**
(21) Anmeldenummer: 12791727.6
(22) Anmeldetag: 14.11.2012
(51) Int. Cl.: H01M 2/10, B60L 11/18, H01M 10/60

(54) **ELEKTRISCHER ENERGIESPEICHER, ELEKTRISCHES ENERGIESPEICHERSYSTEM, VERFAHREN ZUR HERSTELLUNG DES ELEKTRISCHEN ENERGIESPEICHERS UND KRAFTFAHRZEUG**
ELECTRICAL ENERGY STORE, ELECTRICAL ENERGY STORAGE SYSTEM, METHOD FOR PRODUCING THE ELECTRICAL ENERGY STORE, AND MOTOR VEHICLE
ACCUMULATEUR D'ÉNERGIE ÉLECTRIQUE, SYSTÈME D'ACCUMULATION D'ÉNERGIE ÉLECTRIQUE, PROCÉDÉ DE FABRICATION DE L'ACCUMULATEUR D'ÉNERGIE ÉLECTRIQUE ET VÉHICULE AUTOMOBILE

(30) Priorität: 14.12.2011 DE 102011088600
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: MUELLER, Carsten, 36469 Tiefenort (DE); KOHLBERGER, Markus, 70174 Stuttgart (DE); DUERNEGGER, Wolfgang, 73614 Schomdorf (DE); BIEDERT, Johannes, 70563 Stuttgart (DE)
(74) Vertreter: Bee, Joachim
(86) Internationale Anmeldenummer: PCT/EP2012/072532
(87) Internationale Veröffentlichungsnummer: WO 2013/087326

(56) Entgegenhaltungen:
- EP-A2- 2 413 395
- DE-A1-102007 010 751
- DE-A1-102008 034 886
- DE-A1-102008 059 960

## Beschreibung

Die vorliegende Erfindung betrifft einen elektrischen Energiespeicher, ein elektrisches Energiespeichersystem, welches den elektrischen Energiespeicher umfasst, sowie ein Verfahren zur Herstellung des erfindungsgemäßen elektrischen Energiespeichers und ein Kraftfahrzeug, welches einen erfindungsgemäßen elektrischen Energiespeicher oder ein erfindungsgemäßes elektrisches Energiespeichersystem umfasst.

### Stand der Technik

Es besteht ein erheblicher Bedarf an Batterien für breite Anwendungsbereiche, beispielsweise für Fahrzeuge, stationäre Anlagen, wie zum Beispiel Windkraftanlagen und mobile Elektronikgeräte, wie zum Beispiel Laptops und Kommunikationsgeräte. An diese Batterien werden sehr hohe Anforderungen hinsichtlich Zuverlässigkeit, Lebensdauer und Leistungsfähigkeit gestellt.

Prädestiniert für ein breites Einsatzgebiet von Applikationen ist die Lithium-Ionen-Technologie. Sie zeichnet sich unter anderem durch hohe Energiedichte und eine äußerst geringe Selbstentladung aus.

Derartige Lithium-Ionen-Zellen umfassen üblicherweise eine Elektrode, die Lithium-Ionen im Zuge der sogenannten Interkalation reversibel einlagern kann oder im Zuge der sogenannten Deinterkalation wieder auslagern kann. Die Interkalation erfolgt beim Ladeprozess der Batteriezelle, und die Deinterkalation erfolgt bei der Entladung der Batteriezelle zur Stromversorgung von elektrischen Aggregaten.

Batteriesysteme sind meist aus einzelnen Einheiten (sogenannten Sub-Units) aufgebaut, die sich hinsichtlich der Integrationsstufe weiter in Batteriezellenmodule untergliedern lassen. Die Batteriezellenmodule werden aus seriell und/oder parallel verschalteten Batteriezellen wie z. B. Lithium-Ionen-Zellen, aufgebaut.

Zur Fixierung werden diese Module miteinander verspannt.

Insofern die Batteriezellen und demzufolge auch die Batteriezellenmodule metallische Zellgehäuse aufweisen, müssen diese Zellgehäuse der Module in einem Batteriesystem gegenüber ihrer Umgebung (z. B. einer benachbarten Batteriezelle und/oder einem benachbarten Modul und/oder dem Modul- oder Batteriegehäuse) elektrisch isoliert werden.

Für die elektrische Isolation von Batteriezellen werden üblicherweise Isolationsfolien eingesetzt, die auch selbstklebend sein können. Weiterhin können auch Verbundstoffe, wie z. B. Aramid oder Kapton zum Einsatz kommen. In weiteren Ausführungsformen werden Schrumpfschläuche als Isolatoren verwendet.

Allerdings haben diese Isolationsfolien den Nachteil, dass an den Kanten der Batteriezelle bzw. des Batteriezellenmoduls Überlappungen notwendig sind, um diese zu isolieren. Schrumpfschläuche decken die Ecken und Kanten ebenfalls nur mangelhaft ab. Diese Isolierungen sind somit lediglich als Basisisolationen einsetzbar, die nicht für alle Anwendungsfälle und/oder Betriebsbedingungen ausreichenden Isolationsschutz bzw. Sicherheitsreserven aufweisen.

Zudem bieten sie eine nur geringe Verschleißbeständigkeit und/oder die Gefahr der Beschädigung bei einem Durchstoßen bzw. einem Ein- und/oder Aufreißen des Isolationsmaterials.

Die DE 10 2009 013 727 A1 offenbart eine Batterie mit einem Stapel aus Flachzellen, wobei die Flachzellen jeweils eine Ummantelung aufweisen. Diese Ummantelung ist aus jeweils zwei Schalen gebildet. Zur Herstellung des Batteriezellenstapels müssen somit mehrere Batteriezellen in die jeweiligen Ummantelungen eingelegt werden und diese geschlossen werden. Aufgrund der Materialintensität der Ummantelungen nimmt der Batteriezellenstapel einen relativ großen Bauraum ein.

Die DE 699 29 674 T2 offenbart ein Batteriezellengehäuse, welches lediglich aus relativ dünnen Materiallagen gebildet ist. Anschlüsse der jeweiligen Batteriezellen ragen aus dem Zellgehäuse heraus. Zwischen der Innenseite des Zellgehäuses und der eigentlichen Batteriezelle können Hohlräume bestehen, so dass der Bereich des einen solchen Hohlraum abgrenzenden Gehäuses empfindlich gegenüber mechanischen Einflüssen ist.

Die DE 197 14 953 B4 offenbart ein Behältergehäuse für elektrolytische Zellen, wobei der Behälter wenigstens zwei Behälterhälften aufweist, die aneinander anbringbar sind. Auch hier besteht ein relativ hoher Material- und Montageaufwand zur Herstellung eines solchen Behälters, verbunden mit einem relativ großen Bauraumbedarf.

Darüber hinaus offenbart DE 10 2008 059960 A1 einen elektrischen Energiespeicher mit einem Batteriezellenmodul, sowie einer Ummantelung aus einem elektrisch isolierenden Material in Form einer ausgehärteten Vergussmasse auf, die Aussparungen aufweist durch welche die Anschlussterminal der Zellen geführt sind.

### Offenbarung der Erfindung

Es wird ein elektrischer Energiespeicher zur Verfügung gestellt, der ein Batteriezellenmodul, insbesondere ein Lithium-Ionen-Batteriezellenmodul sowie eine Ummantelung aus einem elektrisch isolierenden Material umfasst, die das Batteriezellenmodul umhüllt. Erfindungsgemäß ist vorgesehen, dass die Ummantelung eine Öffnung aufweist, deren Projektionsfläche im Wesentlichen einer senkrecht zur Projektionsrichtung verlaufenden Querschnittsfläche des Batteriezellenmoduls entspricht. Das heißt, dass die Fläche der Projektion der Öffnung in einer zur Ebene der Öffnung senkrecht verlaufenden Projektionsrichtung im Wesentlichen einer Querschnittsfläche des Batteriezellenmoduls entspricht, die senkrecht zur Projektionsrichtung verläuft. Damit wird ein Einschieben oder auch Herausziehen des Batteriezellenmoduls aus der Ummantelung ermöglicht.

Vorzugsweise entspricht die Projektionsfläche des Öffnungsbereiches genau der Querschnittsfläche des Batteriezellenmoduls.

Die Ummantelung stellt somit ein Formteil dar, welches im Wesentlichen die äußere Form der zu verstärkenden Zelle oder der Zellen des Batteriezellenmoduls aufweist.

Durch die Ummantelung lässt sich die Isolation sowie die mechanische Festigkeit einer einzelnen Zelle bzw. des Zellenpakets des Batteriezellenmoduls verstärken.

Dabei bezieht sich die vorliegende Erfindung insbesondere auf den Einsatz von sogenannten Hardcase-Zellen, die ein prismatisches oder zylindrisches Metallgehäuse besitzen. Die Erfindung ist dabei aber nicht nur auf Li-Ionen Batteriezellen, sondern auch auf andere Chemiesysteme wie z. B. Nickel-Metall-Hydrid Zellen und Lithium-Metall-Polymer Zellen gerichtet, die ein entsprechendes Metallgehäuse aufweisen.

Der erfindungsgemäße elektrische Energiespeicher umfasst somit eine Ummantelung als Formteil, welches als Verstärkungselement der jeweiligen Zelle bzw. Zellen und gegebenenfalls deren Basisisolation dienen kann. Durch die Ummantelung können die Isolationseigenschaften, die die Merkmale der Basisisolation übersteigen, individuell auf die Anforderungen des Moduldesigns bzw. auf die Anforderungen des Anwendungsfalls und/oder der Betriebsbedingungen angepasst werden.

Ein weiterer Vorteil liegt in der von der Basisisolation unabhängigen Materialauswahl für die Ummantelung. Somit kann die Gesamtisolationssicherheit für Einflussgrößen gesteigert werden, gegenüber denen die Basisisolation keine zufriedenstellende Sicherheit aufweist.

Das Batteriezellenmodul kann dabei lediglich eine Batteriezelle oder mehrere Batteriezellen aufweisen.

Erfindungsgemäß ist vorgesehen, dass das Batteriezellenmodul Terminals aufweist, die an einer der Oberflächen des Batteriezellenmoduls angeordnet sind, wobei die Öffnung in der Ummantelung an einer dieser Oberfläche gegenüberliegenden Oberfläche des Batteriezellenmoduls ausgebildet ist.

Die Terminals können auch als Anschlussstellen bezeichnet werden.

Am Boden, also an einer Oberfläche des Batteriezellenmoduls, die der mit den Terminals versehenen Oberfläche gegenüberliegt, befindet sich in dieser Ausführungsvariante in vorzugsweiser Ausgestaltung eine Öffnung, so dass die Zellen zweckmäßig an ein Thermomanagementsystem angebunden werden können.

Weiterhin ist vorgesehen dass die Ummantelung an der mit den Terminals versehenen Oberfläche des Batteriezellenmoduls wenigstens eine Aussparung zur Hindurchführung der Terminals aufweist.

Vorzugsweise ist dabei für jedes Terminal eine eigene Aussparung vorgesehen. Bei der Ausgestaltung des elektrischen Energiespeichers, in der das Batteriezellenmodul mehrere Batteriezellen aufweist, so dass das Batteriezellenmodul aus Terminals mehrerer Batteriezellen gebildete Reihen aufweist, kann die Ummantelung auch für jede dieser Reihen jeweils eine Aussparung aufweisen.

Die Ummantelung weist erfindungsgemäß wenigstens eine Lasche auf, die mit dem Rand einer
Aussparung verbunden ist, wobei die Lasche zumindest mit einer Komponente ihrer Erstreckungsrichtung parallel zu dem Terminal verläuft, welches sich durch die Aussparung erstreckt, an welcher die Lasche angeordnet ist. Das heißt, dass an der Oberfläche des Batteriezellenmoduls Aussparungen zur Hindurchführung der Anschlüsse in Form von Terminals bzw. Zellverbindern sowie für eine Entgasung vorhanden sind, wobei die Aussparungen mit Laschen zur Verlängerung von elektrischen Kriechstrecken ausgeführt werden. Die mit einer Lasche versehene Aussparung kann dabei gegebenenfalls lediglich als ein Schlitz oder mehrere Schlitze im Ummantelungsbereich ausgebildet sein, die dabei die Lasche formen.

Der erfindungsgemäße elektrische Energiespeicher kann dabei mit einer elektrischen Isolierung versehen sein, die an der Oberfläche des Batteriezellenmoduls zumindest bereichsweise angeordnet ist. Diese elektrische Basisisolierung kann z. B. eine Isolationsschicht sein. Die Ummantelung besteht dabei aus elektrisch isolierendem Werkstoff, nämlich hauptsächlich Kunststoffe, beispielsweise PET oder PA. Andere Werkstoffe, die die elektrischen, mechanischen, thermischen und chemischen Anforderungen erfüllen, können ebenfalls verwendet werden.

Als Fertigungsverfahren zur Herstellung der Ummantelung kommt Spritzen und/oder Gießen und/oder Tiefziehen (thermisch unterstützt) und/oder Schweißen bzw. eine Kombination der genannten Möglichkeiten infrage. Die Wandstärke der Ummantelung kann zwischen 20 bis 500 µm betragen, vorzugsweise 100 µm.

Weiterhin wird erfindungsgemäß ein elektrisches Energiespeichersystem zur Verfügung gestellt, welches einen erfindungsgemäßen elektrischen Energiespeicher umfasst sowie eine Kühleinrichtung, die das Batteriezellenmodul an der Oberfläche kontaktiert, an der die Ummantelung die Öffnung aufweist.

Ein weiterer Aspekt der Erfindung ist ein Verfahren zur Herstellung des erfindungsgemäßen elektrischen Energiespeichers, bei dem das Batteriezellenmodul durch die Öffnung in die Ummantelung eingeschoben wird.

Ergänzt wird die vorliegende Erfindung durch ein Kraftfahrzeug, welches insbesondere ein elektromotorisch antreibbares Kraftfahrzeug sein kann, und welches wenigstens einen erfindungsgemäßen elektrischen Energiespeicher oder wenigstens ein erfindungsgemäßes elektrisches Energiespeichersystem umfasst.

### Zeichnungen

Ausführungsbeispiele der Erfindung werden anhand der Zeichnungen und der nachfolgenden Beschreibung näher erläutert. Es zeigen:
Figur 1 einen erfindungsgemäßen elektrischen Energiespeicher mit nur einer Batteriezelle in perspektivischer Ansicht,
Figur 2 eine Ummantelung für nur eine Batteriezelle in perspektivischer Ansicht,
Figur 3 einen erfindungsgemäßen elektrischen Energiespeicher mit mehreren Batteriezellen in perspektivischer Ansicht und aufgeschnittener Ummantelung, und
Figur 4 einen erfindungsgemäßen elektrischen Energiespeicher mit mehreren Batteriezellen in einer weiteren perspektivischen Ansicht.

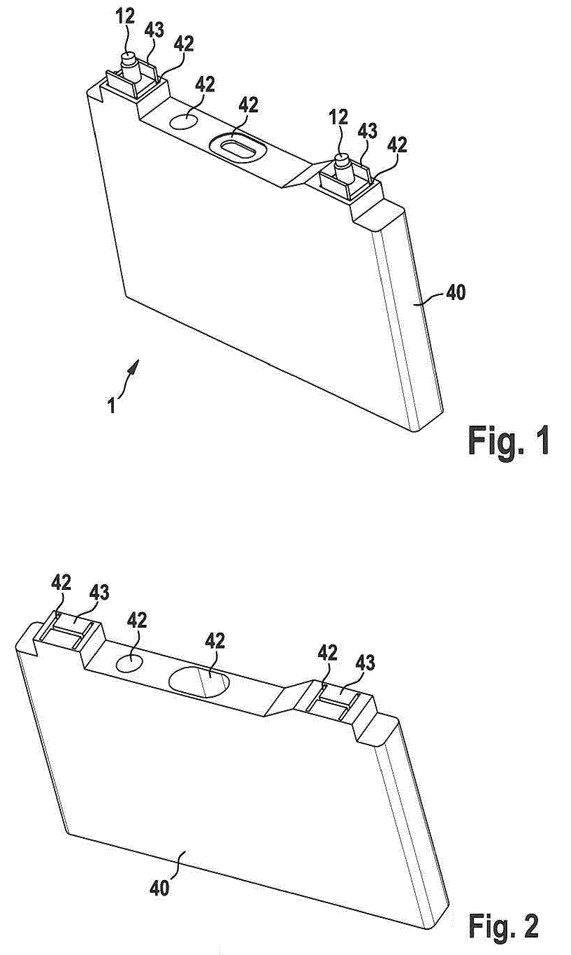

Zunächst wird anhand von Figur 1 ein erfindungsgemäßer elektrischer Energiespeicher 1 erläutert, dessen Batteriezellenmodul 10 lediglich durch eine Batteriezelle ausgebildet ist. Ersichtlich ist, dass die Batteriezelle, von der lediglich die Terminals 12 erkennbar sind, von einer Ummantelung 40 umgeben ist. Die Terminals 12 ragen aus Aussparungen 42, die in der Ummantelung 40 vorgesehen sind, heraus. Zwischen den Terminals 12 befinden sich weitere Aussparungen 42, die zum Beispiel Entgasungsöffnungen der Batteriezelle und/oder Einfüllöffnungen freilegen. Die Aussparungen 42, durch die die Terminals 12 ragen, sind in der in Figur 1 dargestellten Ausführungsvariante mit Laschen 43 versehen, so dass der Weg von Kriechströmen zwischen benachbart angeordneten Batteriezellen verlängert wird, und somit die Gefahr eines Kurzschlusses bzw. einer schleichenden Entladung verringert wird.

Der Vorteil dieses elektrischen Energiespeichers besteht insbesondere darin, dass das von der Ummantelung 40 umhüllte Batteriezellenmodul 10 in optimaler Weise in Bezug zur Umgebung elektrisch isoliert ist. Weiterhin wird durch die Ummantelung die mechanische Festigkeit des Batteriezellenmoduls erhöht.

Aus Figur 2 ist eine ohne Batteriezelle dargestellte Ummantelung 40 ersichtlich. Klar erkennbar sind dabei die einzelnen Aussparungen 42 an der Seite, die für den Heraustritt der Terminals, wie in Figur 1 dargestellt, vorgesehen sind. Ersichtlich ist dabei, dass die für die Terminals 12 vorgesehenen Aussparungen 42 jeweils zwei Laschen 43 aufweisen, die im hindurchgeschobenen Zustand der Terminals zur Außenseite des Energiespeichers 1 klappen, so wie es ebenfalls in Figur 1 dargestellt ist. Durch diese konstruktive Ausführungsform der Laschen 43 wird eine einfache und kostengünstige Sicherung gegen Kriechströme zur Verfügung gestellt, welche mit geringem Fertigungsaufwand realisierbar ist, da zur Herstellung der Laschen 43 im Bereich des Austritts der Terminals die Ummantelung 40 lediglich mit Schlitzen zu versehen ist.

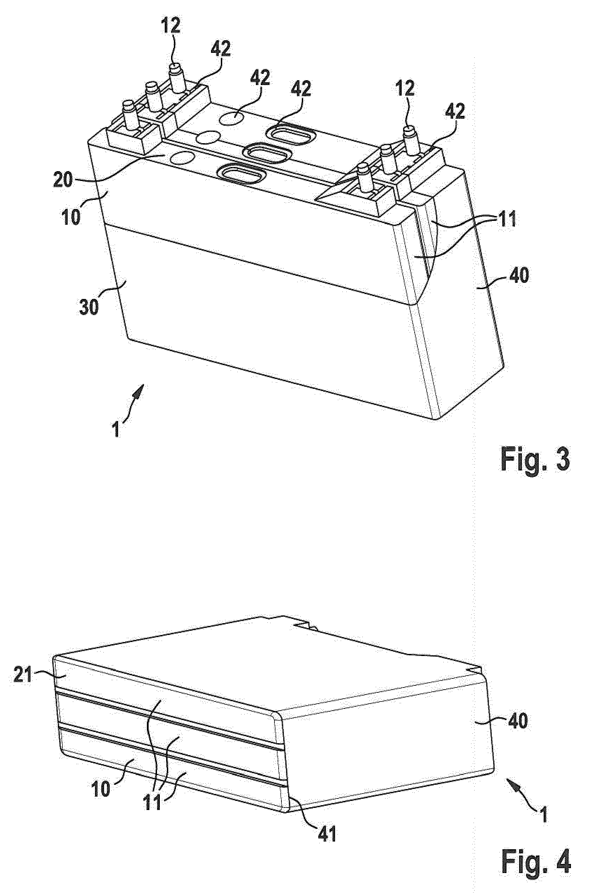

In Figur 3 ist ein erfindungsgemäßer elektrischer Energiespeicher 1 dargestellt, dessen Batteriezellenmodul 10 drei Batteriezellen 11 umfasst. Der erfindungsgemäße elektrische Energiespeicher ist jedoch nicht auf die Anordnung von drei Batteriezellen 11 in einem Batteriezellenmodul 10 eingeschränkt, sondern es können theoretisch unbegrenzt viele Batteriezellen 11 zu einem Batteriezellenmodul 20 zusammengefasst sein. Ersichtlich ist weiterhin, dass die zum Modul zusammengefassten Batteriezellen 11 gemeinsam von einer Ummantelung 40 umhüllt sind, wobei die Reihen der jeweiligen Terminals 12 aus jeweils einer gemeinsamen Aussparung 42 hervorragen. Auch diese Ummantelung 40 weist je Batteriezelle 11 weitere Aussparungen 42, zum Beispiel zur Freilegung von Einfüllöffnungen bzw. Entgasungsöffnungen, auf.

Der Vorteil dieser Ausführungsform eines erfindungsgemäßen elektrischen Energiespeichers 1 besteht darin, dass durch die Ummantelung 40 mehrere Batteriezellen 11 gemeinsam von ihrer Umgebung elektrisch isoliert werden, sowie mechanisch zusammengehalten werden und vor mechanischen Beeinflussungen geschützt werden. Das heißt, dass nicht zwingend jede einzelne Batteriezelle, wie in Figur 1 dargestellt, von einer Ummantelung 40 umhüllt sein muss, sondern dass auch mehrere, zu einem Batteriezellenmodul 10 zusammengefasste Batteriezellen 11 von einer gemeinsamen Ummantelung 40 umgeben sein können.

In einer vorteilhaften Ausgestaltung weist das Batteriezellenmodul 10 des erfindungsgemäßen elektrischen Energiespeichers 1 an der der Terminal-Oberfläche 20 gegenüberliegenden Oberfläche 21, welche bei Zusammenfassung von mehreren Batteriezellen 11 zu einem Batteriezellenmodul 10 durch mehrere Unterseiten der Batteriezellen 11 gebildet ist, eine Öffnung 41 in der Ummantelung 40 auf. Dies ermöglicht eine flächige Kontaktierung des Batteriezellenmoduls 10 mit einer Kühleinrichtung, wie zum Beispiel einer Kühlplatte, zur zielgerichteten Temperierung des Batteriezellenmoduls 10. Dabei ist die Anordnung der Öffnung 41 auf einer Seite des Batteriezellenmoduls 10 nicht auf ein in Figur 4 dargestelltes Batteriezellenmodul 10 mit mehreren Batteriezellen 11 eingeschränkt, sondern es kann auch vorgesehen sein, dass ein wie in Figur 1 dargestellter elektrischer Energiespeicher 1 an seiner den Terminals 12 gegenüberliegenden Seite die Öffnung aufweist, so dass auch dieses Batteriezellenmodul 10 mit der besagten Kühleinrichtung kontaktiert werden kann. Die Öffnung 41 ist dabei derart ausgeführt, dass eine Batteriezelle 11 bzw. ein ganzes Batteriezellenmodul 10 durch die Öffnung 41 in die Ummantelung 40 eingeschoben werden kann, so dass die Ummantelung an der Batteriezelle 11 bzw. am Batteriezellenmodul 10 anliegend diese bzw. dieses umhüllt.

## Patentansprüche

1. Elektrischer Energiespeicher (1), umfassend ein Batteriezellenmodul (10), insbesondere ein Lithium-Ionen-Batteriezellenmodul, sowie eine Ummantelung (40) aus einem elektrisch isolierenden Material, die das Batteriezellenmodul (10) umhüllt, wobei die Ummantelung (40) eine Öffnung (41) aufweist, deren Projektionsfläche im Wesentlichen einer senkrecht zur Projektionsrichtung verlaufenden Querschnittsfläche des Batteriezellenmoduls (10) entspricht, wobei das Batteriezellenmodul (10) Terminals (12) aufweist, die an einer der Oberflächen des Batteriezellenmoduls (10) angeordnet sind, wobei die Öffnung (41) in der Ummantelung (40) an einer dieser Oberfläche (20) gegenüberliegenden Oberfläche (21) des Batteriezellenmoduls (10) ausgebildet ist, wobei die Ummantelung (40) an der mit den Terminals (12) versehenen Oberfläche (20) des Batteriezellenmoduls (10) wenigstens eine Aussparung (42) zur Hindurchführung der Terminals (12) aufweist, **dadurch gekennzeichnet, dass** die Ummantelung (40)
wenigstens eine Lasche (43) aufweist, die mit dem Rand einer Aussparung (42) verbunden ist, wobei die Lasche (43) zumindest mit einer Komponente ihrer Erstreckungsrichtung parallel zu dem Terminal (12) verläuft, welches sich durch die Aussparung (42) erstreckt, an welcher die Lasche (43) angeordnet ist.

2. Elektrischer Energiespeicher nach Anspruch 1, bei dem das Batteriezellenmodul (10) lediglich eine Batteriezelle (11) oder mehrere Batteriezellen (11) aufweist.

3. Elektrischer Energiespeicher nach einem der vorhergehenden Ansprüche, bei dem das Batteriezellenmodul (10) an seiner Oberfläche (20) zumindest bereichsweise eine elektrische Isolierung (30) aufweist.

4. Elektrisches Energiespeichersystem, umfassend einen elektrischen Energiespeicher (1) gemäß einem der Ansprüche 1 bis 3 sowie eine
Kühleinrichtung, die das Batteriezellenmodul (10) an der Oberfläche (20) kontaktiert, an der die Ummantelung (40) die Öffnung (41) aufweist.

5. Verfahren zur Herstellung des elektrischen Energiespeichers gemäß einem der Ansprüche 1 bis 3, bei dem das Batteriezellenmodul (10) durch die Öffnung (41) in
die Ummantelung (40) eingeschoben wird.

6. Kraftfahrzeug, insbesondere elektromotorisch antreibbares Kraftfahrzeug, umfassend wenigstens einen elektrischen Energiespeicher (1) gemäß einem der Ansprüche 1 bis 3
oder wenigstens ein elektrisches Energiespeichersystem gemäß Anspruch 4,
wobei der elektrische Energiespeicher (1) bzw. das elektrische Energiespeichersystem mit einem Antriebssystem des Kraftfahrzeuges verbunden ist.

## Claims

1. Electrical energy store (1) comprising a battery cell module (10), in particular a lithium-ion battery cell module, as well as a casing (40) made of an electrically insulating material which surrounds the battery cell module (10), wherein the casing (40) has an opening (41) whose projection area corresponds essentially to a cross-sectional area of the battery cell module (10) which runs perpendicularly with respect to the projection direction, wherein the battery cell module (10) has terminals (12) which are arranged on one of the surfaces of the battery cell module (10), wherein the opening (41) in the casing (40) is formed on a surface (21) of the battery cell module (10) lying opposite said surface (20), wherein the casing (40) has, on the surface (20) of the battery cell module (10) provided with the terminals (12), at least one cutout (42) for feeding through the terminals (12), **characterized in that** the casing (40) has at least one clip (43) which is connected to the edge of a cutout (42), wherein the clip (43) runs, at least with one component of its direction of extent, parallel to the terminal (12) which extends through the cutout (42) on which the clip (43) is arranged.

2. Electrical energy store according to Claim 1, in which the battery cell module (12) has merely one battery cell (11) or a plurality of battery cells (11).

3. Electrical energy store according to one of the preceding claims, in which the battery cell module (10) has electrical insulation (30) at least on certain parts of its surface (20).

4. Electrical energy storage system comprising an electrical energy store (1) according to one of Claims 1 to 3, as well as a cooling device which makes contact with the battery cell module (10) at the surface (20) on which the casing (40) has the opening (41).

5. Method for manufacturing the electrical energy store according to one of Claims 1 to 3, in which the battery cell module (10) is fitted into the casing (40) through the opening (41).

6. Motor vehicle, in particular motor vehicle which can be driven by electric motor, comprising at least one electrical energy store (1) according to one of Claims 1 to 3 or at least one electrical energy storage system according to Claim 4, wherein the electrical energy store (1) or the electrical energy storage system is connected to a drive system of the motor vehicle.

## Revendications

1. Accumulateur d'énergie électrique (1), comprenant un module de cellules de batterie (10), notamment un module de cellules de batterie au lithiumion, ainsi qu'un enrobage (40) en un matériau électriquement isolant qui enveloppe le module de cellules de batterie (10), l'enrobage (40) possédant une ouverture (41) dont la surface de projection correspond sensiblement à une surface de section transversale du module de cellules de batterie (10) qui s'étend perpendiculairement au sens de projection, le module de cellules de batterie (10) possédant des bornes (12) qui sont disposées sur l'une des surfaces du module de cellules de batterie (10), l'ouverture (41) étant formée dans l'enrobage (40) sur une surface (21) du module de cellules de batterie (10) à l'opposé de cette surface (20), l'enrobage (40) possédant, sur la surface (20) du module de cellules de batterie (10) qui est pourvue des bornes (12), au moins une cavité (42) destinée à la traversée des bornes (12), **caractérisé en ce que** l'enrobage (40) possède au moins une languette (43) qui est reliée au bord d'une cavité (42), la languette (43) s'étendant, au moins avec une composante de son sens de projection, parallèlement à la borne (12) qui s'étend à travers la cavité (42) au niveau de laquelle est disposée la languette (43).

2. Accumulateur d'énergie électrique selon la revendication 1, avec lequel le module de cellules de batterie (10) possède uniquement une cellule de batterie (11) ou plusieurs cellules de batterie (11).

3. Accumulateur d'énergie électrique selon l'une des revendications précédentes, avec lequel le module de cellules de batterie (10) possède sur sa surface (20) une isolation électrique (30) au moins dans certaines zones.

4. Système d'accumulation d'énergie électrique comprenant un accumulateur d'énergie électrique (1) selon l'une des revendications 1 à 3 ainsi qu'un dispositif de refroidissement qui entre en contact avec le module de cellules de batterie (10) au niveau de la surface (20) sur laquelle l'enrobage (40) possède l'ouverture (41).

5. Procédé de fabrication de l'accumulateur d'énergie électrique selon l'une des revendications 1 à 3, selon lequel le module de cellules de batterie (10) est inséré dans l'enrobage (40) à travers l'ouverture (41).

6. Véhicule automobile, notamment véhicule automobile à propulsion électromotorisée, comprenant au moins un accumulateur d'énergie électrique (1) selon l'une des revendications 1 à 3 ou au moins un système d'accumulation d'énergie électrique selon la revendication 4, l'accumulateur d'énergie électrique (1) ou le système d'accumulation d'énergie électrique étant relié à un système de propulsion du véhicule automobile.
